# EUROPEAN PATENT APPLICATION

(11) **EP 2 337 122 A1**
(43) Date of publication of application: **22.06.2011**
(21) Application number: 09816096.3
(22) Date of filing: 17.09.2009
(51) Int. Cl.: H01M 4/02, H01M 4/36, H01M 4/50, H01M 4/52, H01M 4/62

(54) **NONAQUEOUS ELECTROLYTE SECONDARY BATTERY**

(30) Priority: 26.09.2008 JP 2008247391
(71) Applicant: Sanyo Electric Co., Ltd., Osaka 570-8677 (JP)
(72) Inventor: OOKITA Kazunari, Moriguchi-shi Osaka 570-8677 (JP); NIINA Fumiharu, Moriguchi-shi Osaka 570-8677 (JP); FUJIMOTO Hiroyuki, Moriguchi-shi Osaka 570-8677 (JP); YADA Chihiro, Moriguchi-shi Osaka 570-8677 (JP)
(74) Representative: Glawe, Delfs, Moll
(86) International application number: PCT/JP2009/066244
(87) International publication number: WO 2010/035681

(57) **Abstract**

A non-aqueous electrolyte secondary battery using lithium-containing transition metal composite oxide which has a layer structure, contains a lot of Ni and Mn and is inexpensive as a positive electrode active material and attaining high output characteristics even under low temperature environment is provided.

The non-aqueous electrolyte secondary battery includes a positive electrode 11 containing a positive electrode active material, a negative electrode 12 containing a negative electrode active material and a non-aqueous electrolyte 14 having lithium ion conductivity, wherein lithium-containing transition metal composite oxide having a layer structure and being represented by a general formula Li₁₊ₓNiₐMn_{b}Co_{c}O_{2+d} wherein x, a, b, c and d satisfy x+a+b+c=1, 0.25≤ a ≤0.60, 0.25≤ b ≤ 0.60, 0≤ c ≤ 0.40, 0≤ x ≤ 0.10, 0.7≤ a/b ≤ 2.0 and -0.1≤ d ≤ 0.1 is used as the positive electrode active material of positive electrode, and the surface of positive electrode active material is covered with an amorphous carbon material and a conductive agent of amorphous carbon material is inserted between particles of the positive electrode active material.

## Description

### TECHNICAL FIELD

The present invention relates to a non-aqueous electrolyte secondary battery comprising a positive electrode containing a positive electrode active material, a negative electrode containing a negative electrode active material and a non-aqueous electrolyte having lithium ion conductivity. More particularly, the invention relates to a non-aqueous electrolyte secondary battery employing lithium-containing transition metal composite oxide which has a layer structure containing a lot of nickel and manganese and is inexpensive as a positive electrode active material of positive electrode and to improve the positive electrode, so that high output characteristics under a low temperature environment are attained.

### BACKGROUND ART

In recent years, miniaturization and weight saving of mobile computing devices, such as a cellular phone, notebook computer, and PDA have been remarkably advanced. Further, power consumption has also been increasing associated with multi-functionalization. As a result, demands for miniaturization and weight saving in a non-aqueous electrolyte secondary battery used as these power supplies have been increasing.

Further, in recent years, developments of a hybrid electric vehicle using both a gasoline engine of vehicle and an electric motor have been advanced in order to solve environment problems caused by emission gas discharged from vehicles.

As a power supply for such a hybrid electric vehicle, generally, a nickel-metal hydride battery has been widely used. On the other hand, a non-aqueous electrolyte secondary battery has been examined as a power supply having higher capacity and higher output characteristics.

In such a non-aqueous electrolyte secondary battery, as a positive electrode active material of positive electrode, lithium-containing transition metal composite oxide of which main component is cobalt, such as lithium cobaltate LiCoO₂, has been generally used.

However, cobalt used in such a positive electrode active material is a rare resource, so it leads to problems of cost increase and a stable supply is difficult. Particularly, in a case where cobalt is used as the power supply for the hybrid electric vehicle, a large amount of cobalt is required and its cost as the power supply is remarkably increased.

Therefore, in recent years, as a low-cost positive electrode active material being capable of stable supply, instead of cobalt, the use of the positive electrode of which main component is nickel or manganese has been examined.

For example, lithium nickelate LiNiO₂ having a layer structure has been expected as a material being capable of obtaining high discharge capacity. On the other hand, it has defects that thermal stability is degraded, safety is low and overvoltage is high.

For example, lithium manganate LiMn₂O₄ having a spinel structure is one of abundant resources and therefore is a low-cost material. On the other hand, it has defects that energy density is small and manganese is eluted in the non-aqueous electrolyte under high temperature environment.

Therefore, recently, in view of low-cost and excellent thermal stability, the use of lithium-containing transition metal composite oxide employing two elements of nickel and manganese as a main component of the transition metal and having a layer structure has drawn attention.

For example, it has been disclosed that lithium composite oxide having a rhombohedral structure and being represented by LiNi₁₋ₓMnₓO₂ wherein an error of ratio of the nickel element and the manganese element is 10 atomic % or less is used as a positive electrode active material having a high capacity and an excellent thermal stability (See patent document 1).

However, in such a lithium composite oxide disclosed in patent document 1, high rate charge-discharge performances are low and output characteristics under low temperature environment are degraded. As a result, it has been difficult to use such a lithium composite oxide as the power supply for hybrid electric vehicle.

Also, in the lithium-containing transition metal composite oxide having the layer structure containing at least one of nickel and manganese, it has been proposed to use a single phase cathode material wherein one part of nickel and manganese is substituted with cobalt (See patent document 2).

However, in the single phase cathode material proposed in patent document 2, an excessive amount of cobalt to be substituted for one part of nickel and manganese leads to a problem of cost increase. On the other hand, a small amount of cobalt for substitution leads a problem of great degradation of high rate charge-discharge performances and great deterioration of output characteristics under low temperature.

It has been disclosed that a fibrous carbon is used as a conductive agent in a positive electrode containing a positive electrode active material wherein one part of nickel and manganese is substituted with cobalt for the purpose of improving low temperature characteristics of a non-aqueous electrolyte secondary battery (See patent document 3).

It has been disclosed a fibrous carbon is contained in a conductive agent in a positive electrode while a lithium salt having oxalate complex as an anion is added to a non-aqueous electrolyte, for the purpose of obtaining superior output characteristics under low temperature environment (See patent document 4).

Further, it has been proposed to use a positive electrode active material covering 15 % or more of apparent surface of a positive electrode active material body of powdered metal oxide in a thickness of 0.01 µm to 0.03 µm with a carbon material having specific surface area of 150 m²/g or more for the purpose of improving initial capacity and cycle characteristics. Also, it has been disclosed a conductive agent of graphite powder is interposed among positive electrode materials (See patent document 5).

However, even in patent documents 3 to 5, in a case where the lithium-containing transition metal composite oxide having the layer structure containing a lot of nickel and manganese and being low-cost is used as the positive electrode active material, the output characteristics under low temperature environment are not still sufficient. As a result, such a non-aqueous electrolyte secondary battery is difficult to be used as power supply for the hybrid electric vehicle and the like.

### PRIOR ART DOCUMENTS

### PATENT DOCUMENTS

[Patent Document 1] JP-B 3890185
[Patent Document 2] JP-B 3571671
[Patent Document 3] JP-A 2006-278079
[Patent Document 4] JP-A 2007-250440
[Patent Document 5] JP-A 9-92265

### DISCLOSURE OF THE INVENTION

### PROBLEMS TO BE SOLVED

The invention is directed to solution to the aforementioned problems of non-aqueous electrolyte secondary battery comprising a positive electrode containing a positive electrode active material, a negative electrode containing a negative electrode active material and a non-aqueous electrolyte having lithium ion conductivity.

Specifically, it is an object of the invention to improve a positive electrode of a non-aqueous electrolyte secondary battery using lithium-containing transition metal composite oxide having a layer structure and containing a lot of nickel and manganese as a positive electrode active material in order to obtain high output characteristics under low temperature environment for the purpose of utilising the non-aqueous electrolyte secondary battery suitably as a power supply for a hybrid electric vehicle.

### SOLUTION TO THE PROBLEMS

According to the present invention, in order to solve the above mentioned problems, a non-aqueous electrolyte secondary battery provided with a positive electrode containing a positive electrode active material, a negative electrode containing a negative electrode active material and a non-aqueous electrolyte having lithium ion conductivity uses lithium-containing transition metal composite oxide having a layer structure and being represented by a general formula Ll₁₊ₓNiₐMn_{b}CO_{c}O_{2+d} wherein x, a, b, c and d satisfy x+a+b+c=1, 0.25≤ a ≤0.60, 0.25≤ b ≤0.60, 0≤ c ≤0.40, 0≤ x ≤0.10, 0.7≤ a/b ≤ 2.0 and -0.1≤ d ≤0.1 as the positive electrode active material of positive electrode. Further, the surface of the positive electrode active material is covered with an amorphous carbon material and a conductive agent of amorphous carbon material is inserted between particles of positive electrode active material.

Examples of usable positive electrode active material represented by the general formula Li₁₊ₓNiₐMn_{b}CO_{c}O_{2+d} wherein c is not 0 and Co is contained include Li_{1.06}Ni_{0.33}Mn_{0.28}Co_{0.33}O₂, Li_{1.06}Ni_{0.38}Mn_{0.37}CO_{0.19}O₂, Li_{1.06}Ni_{0.47}Mn_{0.28}Co_{0.19}O₂, Li_{1.06}Ni_{0.37}Mn_{0.48}CO_{0.09}O₂, and Li_{1.07}Ni_{0.56}Mn_{0.28}CO_{0.09}O₂.

Further, as the positive electrode active material represented by the general formula Li₁₊ₓNiₐHn_{b}Co_{c}O_{2+d} wherein c defining the amount of Co is 0, lithium-containing transition metal composite oxide having a layer structure and being represented by hi₁₊ₓNiₐMn_{b}O_{2+d} may be used. Examples of such a usable positive electrode active material which does not contain Co include Li_{1.06}Ni_{0.56}Mn_{0.38}O₂, Li_{1.06}Ni_{0.52}Mn_{0.42}O₂ and the like.

As the conductive agent of amorphous carbon material which is added to the positive electrode, an amorphous carbon material having a specific surface area of 100 m²/g or more may be preferably used.

Here, the above described amorphous carbon material is called a carbon precursor, which has a crystallite size Lc being smaller than crystalline carbon at c-axis direction and having several nm, generally 5 nm or less.

Further, in a case where the positive electrode uses a positive electrode composite comprising the positive electrode active material covered with the amorphous carbon material, the conductive agent of the amorphous carbon material, and the binding agent, when the amount of the amorphous carbon material in the positive electrode composite is too small, output characteristics are not sufficiently improved under the low temperature environment. On the other hand, when the amount of the amorphous carbon material is excessive, the adhesive property between the positive electrode composite and the positive electrode current collector is degraded and a variety of battery characteristics are deteriorated. Therefore, it may be preferable that the total amount of the amorphous carbon material in the positive electrode composite be within 2 to 10 mass %.

In covering the surface of the positive electrode active material with the amorphous carbon material, a variety of apparatuses for mixing particles in dry process utilizing mechanochemical force function may be used. Specifically, Nanocular, Nobilta and Mechanofusion made by HOSOKAWA MICRON CORPORATION, which have commonly been used as a dry process surface modification machine, may be used.

According to the non-aqueous electrolyte secondary battery of the present invention, any negative electrode active material being capable of storing and releasing lithium reversibly may be used and type thereof is not particularly limited. Examples of usable negative electrode active material include a carbon material, a metal or an alloy material alloying with lithium, and a metal oxide. In view of material cost, as the negative electrode active material, a carbon material may preferably be used. Examples of usable carbon material include natural graphite, artificial graphite, graphitized mesophase pitch carbon fiber (MCF), meso-carbon microbeads (MCMB), coke, hard carbon, fullerene, and carbon nanotube. Particularly, in view of improvement of high rate charge-discharge performances, a carbon material covering graphite material with low crystallinity carbon may preferably be used.

According to the non-aqueous electrolyte secondary battery of the invention, as the non-aqueous electrolyte having lithium ion conductivity, any know non-aqueous electrolyte dissolving a solute in a non-aqueous solvent may be used.

As the non-aqueous solvent used for the non-aqueous electrolyte, any known non-aqueous solvent which has generally been employed in a non-aqueous electrolyte secondary battery may be used. Examples of usable non-aqueous solvent include cyclic carbonate such as ethylene carbonate, propylene carbonate, butylene carbonate and vinylene carbonate, and chain carbonate such as dimethyl carbonate, methyl ethyl carbonate and diethyl carbonate. Particularly, as a non-aqueous solvent of low viscosity and low melting point with high lithium ion conductivity, a mixed solvent of the cyclic carbonate and the chain carbonate may preferably be used. Further, it may be preferable that the volume ratio of cyclic carbonate and chain carbonate in the mixed solvent be within the range of 2/8 to 5/5.

Also, as the non-aqueous solvent for non-aqueous electrolyte, an ionic liquid may be used. In this case, a kind of an anion type and a cationic type is not particularly limited. Particularly, in view of low viscosity, electrochemical stability and hydrophobicity, a combination wherein pyridinium cation, imidazolium cation and quaternary ammonium cation is employed as cationic type and fluorine-containing imide type anion is employed as anion type may preferably be used.

As the solute for non-aqueous electrolyte, any known lithium salt which has generally been employed in a non-aqueous electrolyte secondary battery may be used. Further, as such a lithium salt, a lithium salt containing at least one of P, B, F, O, S, N, and Cl may be used. Specifically, a lithium salt such as LiPF₆, LiBF₄, LiCF₃SO₃, LiN (CF₃SO)₂, LiN (C₂F₅SO₂)₂, LiN (CF₃SO₂) (C₄F₉SO₂), LiC (C₂F₅SO2)₃, LiAsF₆, and LiClO₄ may preferably be used alone or in combination.

According to the non-aqueous electrolyte secondary battery of the invention, as the separator interposed between the positive electrode and the negative electrode, any material capable of inhibiting a short circuit caused by contact of the positive electrode and the negative electrode and capable of impregnating the non-aqueous electrolyte for obtaining lithium ion conductivity may be used. For example, a separator made of polypropylene or polyethylene, and a multilayer separator made of polypropylene-polyethylene may be used.

### EFFECT OF THE INVENTION

In a non-aqueous electrolyte secondary battery according to the present invention, as a positive electrode active material of a positive electrode, lithium-containing transition metal composite oxide having a layer structure and being represented by the general formula Li₁₊ₓNiₐMn_{b}Co_{c}O_{2+d} wherein x, a, b, c and d satisfy x+a+b+c=1, 0.25≤ a ≤0.60, 0.25≤ b ≤0. 60, 0≤ c ≤0.40, 0≤ x ≤0.10, 0.7≤ a/b ≤2. 0 and -0.1≤ d ≤0.1 is used and the surface of positive electrode active material is covered with an amorphous carbon material, and a conductive agent of amorphous carbon material is inserted between particles of positive electrode active material. As a result, the non-aqueous electrolyte secondary battery according to the invention features high output characteristics under low temperature environment and may be suitably used as power supply for a hybrid electric vehicle.

Also, in a case where lithium-containing transitionmetal composite oxide having a layer structure and being represented by Li₁₊ₓNiₐMn_{b}O_{2+d} is used as a positive electrode active material represented by the general formula Li₁₊ₓNiₐMn_{b}Co_{c}O_{2+d} wherein c defining the amount of Co is 0, when the surface of positive electrode active material is covered with an amorphous carbon material and a conductive agent of amorphous carbon material is inserted between particles of positive electrode active material, high output characteristics may be obtained under low temperature environment. Further, in a case where the lithium-containing transition metal composite oxide comprised of Ni and Mn without containing Co which is rare material and expensive is used, production costs of positive electrode active material are reduced. As a result, a non-aqueous electrolyte secondary battery which is preferably used as the power supply for the hybrid electric vehicle may be produced at low costs.

As is mentioned as above, in a case where the surface of lithium-containing transition metal composite oxide having the layer structure and being represented by the above formula used as positive electrode active material is covered with the amorphous carbon material and the conductive agent of amorphous carbon material is inserted between the particles of positive electrode active material, output characteristics under low temperature environment are improved. With regard to the reason why such an improvement is attained, although the details are not clear, the inventors of the invention conceive that a reaction resistance on the interface between the positive electrode active material and the non-aqueous electrolyte is decreased by covering of the positive electrode active material surface with the amorphous carbon material and that lithium ion is satisfactorily diffused under low temperature environment by the use of the conductive agent of the amorphous carbon material having a higher liquid-retaining property than graphite material, so that supply of lithium ion to the interface between the positive electrode active material and the non-aqueous electrolyte becomes smooth.

### BRIEF DESCRIPTION OF THE DRAWINGS

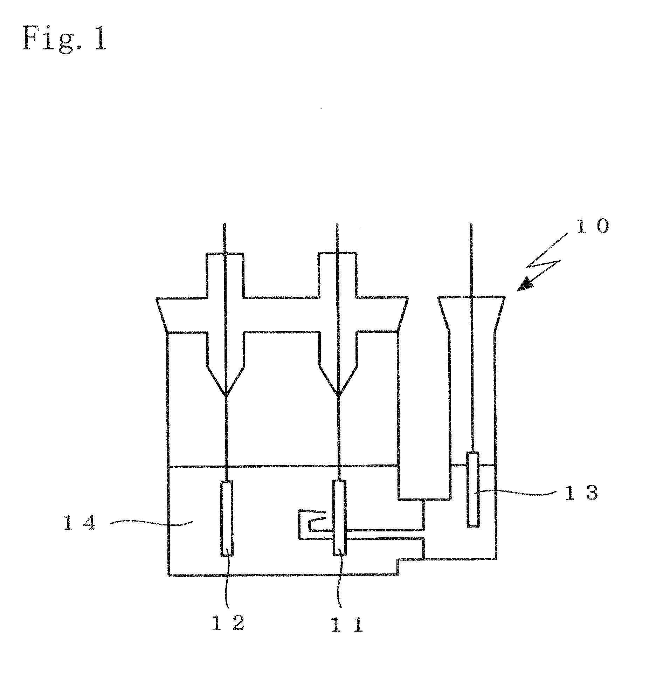

Fig. 1 is a schematic explanatory view illustrating a three-electrode test cell using a positive electrode as working electrode fabricated in Examples and Comparative Examples of the present invention.

### EXAMPLES

A non-aqueous electrolyte secondary battery according to the invention will hereinbelow be described in detail by way of examples thereof. In addition, comparative examples are also cited to clarify that the non-aqueous electrolyte secondary battery according to the examples of the invention shows improved output characteristics under various temperature environments. It is to be noted that non-aqueous electrolyte secondary battery according to the invention is not limited to the following examples and may be practiced with suitable modifications made thereto so long as such modifications do not deviate from the scope of the invention.

### (Example 1)

In Example 1, a positive electrode active material was prepared as follows. Li₂Co₃ and Ni_{0.35}Mn_{0.30}Co_{0.35} (OH) ₂ obtained by a co-precipitation method were mixed at a prescribed ratio, heated to 900°C and burned to prepare a positive electrode active material having a layer structure and being represented by a formula Li_{1.06}Ni_{0.33}Mn_{0.28}Co_{0.33}O₂. An average particle diameter of the resultant positive electrode active material was about 12 µm.

Next, the positive electrode active material and an amorphous carbon having a specific surface area of 800 m²/g (Ketjen black EC made by Ketjen black International company) were processed using a dry process surface modification machine (Nobilta NOB-130 made by HOSOKAWA MICRON CORPORATION) so as to cover the surface of the positive electrode active material with the amorphous carbon material. A ratio of the amorphous carbon covering the positive electrode active material against the positive electrode active material was 3 mass %. The positive electrode active material having the surface covered with the amorphous carbon was observed by a scanning transmission electron microscope (SEM). According to the results of observation, the surface of positive electrode active material is uniformly covered with the amorphous carbon.

Further, as a conductive agent, the same amorphous carbon having the specific surface area of 800 m²/g (Ketjen black EC made by Ketjen Black International Company) covering the positive electrode active material surface was used. The positive electrode active material having the surface covered with the amorphous carbon, the conductive agent of the amorphous carbon, and a solution dissolving polyvinylidene fluoride as a binder in N-methyl-2-pyrrolidone were mixed together to give positive electrode composite slurry. The mass ratio in the mixture of the positive electrode active material, the conductive agent and the binding agent was 95:2:3.

The resultant positive electrode composite slurry was applied on a positive electrode current collector of an aluminum foil and dried. Subsequently, the positive electrode current collector was rolled by a roller and a current collector tab of aluminum was installed thereto. Thus, a positive electrode was prepared. Here, the total amount of amorphous carbon in the positive electrode composite slurry was about 4.9 mass %.

As illustrated in Fig.1, while the positive electrode fabricated above was used as a working electrode 11, metal lithium was used as a counter electrode 12 of negative electrode and a reference electrode 13. Further, LiPF₆ was dissolved in a concentration of 1 mol/l in a mixed solvent wherein ethylene carbonate, methyl ethyl carbonate and dimethyl carbonate were mixed at a volume ratio of 3:3:4 to prepare a non-aqueous electrolyte 14. Thus, a three-electrode cell 10 was fabricated.

### (Example 2)

In Example 2, in preparation of the positive electrode of Example 1, an amorphous carbon having a specific surface area of 39 m²/g (HS-100 made by DENKI KAGAKU KOGYO K.K.) was used as the conductive agent. Except for the above, the same procedure of Example 1 was used to fabricate a positive electrode and a three-electrode cell of Example 2. Here, the total amount of amorphous carbon in the positive electrode composite slurry was about 4.9 mass %.

### (Comparative Example 1)

In Comparative Example 1, the above conductive agent was not added in preparation of the positive electrode of Example 1. Except for the above, the same procedure of Example 1 was used to fabricate a positive electrode and a three-electrode cell of Comparative Example 1.

### (Comparative Example 2)

In Comparative Example 2, scale-shaped graphite having a specific surface area of 8.3 m²/g (UP-10 made by Nippon Graphite Industries, Co., Ltd.) was used as the conductive agent in preparation of the positive electrode of Example 1. Except for the above, the same procedure of Example 1 was used to fabricate a positive electrode and a three-electrode cell of Comparative Example 2.

### (Comparative Example 3)

In Comparative Example 3, artificial graphite having a specific surface area of 260 m²/g (SP-300S made by Nippon Graphite Industries, Co., Ltd.) was used as the conductive agent in preparation of the positive electrode of Example 1. Except for the above, the same procedure of Example 1 was used to fabricate a positive electrode and a three-electrode cell of Comparative Example 3.

### (Comparative Example 4)

In Comparative Example 4, vapor-grown carbon fiber (VGCF made by Showa Denko K.K.) was used as the conductive agent in preparation of the positive electrode of Example 1. Except for the above, the same procedure of Example 1 was used to fabricate a positive electrode and a three-electrode cell of

### Comparative Example 4.

### (Comparative Example 5)

In Comparative Example 5, the surface of positive electrode active material represented by the formula Li_{1.06}Ni_{0.03}Mn_{0.28}Co_{0.33}O₂ was not covered with the amorphous carbon, and the vapor-grown carbon fiber (VGCF made by Showa Denko K.K.) of Comparative Example 4 was used as the conductive agent. Further, the positive electrode active material, the conductive agent and the binding agent were mixed in a volume ratio of 92:5:3 to prepare positive electrode composite slurry. Except for the above, the same procedure of Example 1 was used to fabricate a positive electrode and a three-electrode cell of Comparative Example 5.

Next, each of the three-electrode cells of Examples 1 and 2 and Comparative Examples 1 to 5 was subjected to a charging and discharging under a temperature environment of 25°C. Each of the three-electrode cells was subjected to constant current charging at a current density of 0.2 mA/cm² until a voltage became 4.3 V (vs. Li/Li⁺). Next, each three-electrode cell was charged at a constant voltage of 4.3 V (vs. Li/Li⁺) until a current density became 0.04 mA/cm². After that, each three-electrode cell was subjected to constant current discharging at the current density of 0.2 mA/cm² until the voltage became 2.5 V (vs. Li/Li⁺). A discharge capacity of this time was determined as a rated capacity of each of the three-electrode cells.

Further, each three-electrode cell of Examples 1 and 2 and Comparative Examples 1 to 5 was charged until each rated capacity became 50 % so that a state of charge (SOC) was 50 %. Then, each three-electrode cell was left in a homeothermal container of -30°C for 5 hours. After that, each open-circuit voltage was measured. Next, each three-electrode cell was discharged at each current density of 0.08 mA/cm², 0.4 mA/cm², 0.8 mA/cm², 1. 2 mA/cm², 1.6 mA/cm², and 2.4 mA/cm² for 10 seconds and each battery voltage after 10 seconds was determined.

Next, as to each three-electrode cell of Examples 1 and 2 and Comparative Examples 1 to 5, each value of current and battery voltage was plotted and each of I-V characteristics at discharging was determined. Further, each current when each battery voltage was 2. 5 V was measured, and each output (mW/cm²) of 50% of state of charge (SOC) under low temperature environment of -30°C was calculated. Then, as to each three-electrode cell of Examples 1 and 2 and Comparative Examples 1 to 4, an increment ratio of output under low temperature environment of -30°C against output of three-electrode cell of Comparative Example 5 was calculated. The results were shown in Table 1.

**[TABLE 1]**

| Positive electrode active material: Li_{1.06}Ni_{0.33}Mn_{0.28}Co_{0.33}O₂ | | | | | |
|---|---|---|---|---|---|
| | Covering material of positive electrode active material | | Conductive agent | | Increment ratio of output under -30°C (%) |
| | Type | Specific surface area (m²/g) | Type | Specific surface area (m²/g) | |
| Example 1 | Amorphous carbon | 800 | Amorphous carbon | 800 | 14.3 |
| Example 2 | Amorphous carbon | 800 | Amorphous carbon | 39 | 8.4 |
| Comp.Ex.1 | Amorphous carbon | 800 | - | - | 4.5 |
| Comp.Ex.2 | Amorphous carbon | 800 | Scale-shaped graphite | 8.3 | -1.7 |
| Comp.Ex.3 | Amorphous carbon | 800 | Artificial graphite | 260 | -1.7 |
| Comp.Ex.4 | Amorphous carbon | 800 | Vapor-grown carbon fiber | - | 1.8 |
| Comp.Ex.5 | - | - | Vapor-grown carbon fiber | - | Base |

As a result, in each of the three-electrode cells of Examples 1 and 2 using the positive electrode wherein the surface of positive electrode active material represented by the formula Ll₁₊ₓNiₐMn_{b}Co_{c}O_{2+d} was covered with the amorphous carbon and the conductive agent of amorphous carbon was added, the output characteristics under the environment of -30°C were remarkably improved as compared with the three-electrode cell of Comparative Example 1 using the positive electrode wherein the conductive agent was not added. Further, as compared with each three-electrode cell of Comparative Examples 2-4 wherein the scale-shaped graphite, the artificial graphite, or the vapor-grown carbon fiber was added as the conductive agent and the three-electrode cell of Comparative Example 5 wherein the surface of the positive electrode active material was not covered with amorphous carbon and the vapor-grown carbon fiber was added as the conductive agent, output characteristics were remarkably improved under the low temperature environment of -30°C in each three-electrode cell of Examples 1 and 2.

Further, in comparison between the three-electrode cells of Examples 1 and 2, the three-electrode cell of Example 1 wherein the amorphous carbon having the specific surface area of 100 m²/g or more was added as the conductive agent exhibited more improved output characteristics under the environment of -30°C than the three-electrode cell of Example 2 wherein the amorphous carbon material having the specific surface area of 100 m²/g or less was added.

Although the positive electrode active material represented by the formula Li_{1.06}Ni_{0.33}Mn_{0.28}CO_{0.33}O₂ was used in Examples 1 and 2, in a case where Li_{1.06}Ni_{0.38}Mn_{0.37}CO_{0.19}O₂, Li_{1.06}Ni_{0.47}Mn_{0.28}Co_{0.19}O₂, Li_{1.06}Ni_{0.37}Mn_{0.48}Co_{0.09}O₂, and Li_{1.07}Ni_{0.56}Mn_{0.28}Co_{0.09}O₂ were used as a positive electrode active material containing Co and being represented by the above general formula, the same effect may be obtained.

### (Example 3)

In Example 3, in preparation of the positive electrode active material of lithium-containing transition metal composite oxide, Li₂C_{O3} and Ni_{0.60}Mn_{0.40}(OH)₂ obtained by the co-precipitation method were mixed at a prescribed ratio, heated to 1000°C and burned to prepare a positive electrode active material having a layer structure and being represented by a formula Li_{1.06}Ni_{0.56}Mn_{0.38}O₂. An average particle diameter of the resultant positive electrode active material was about 6 µm.

Except for the use of the above positive electrode active material, the same procedure of Example 1 was used to fabricate a positive electrode and a three-electrode cell of Example 3.

### (Example 4)

In Example 4, the positive electrode active material of Example 3 represented by the formula Li_{1.06}Ni_{0.56}Mn_{0.38}O₂, was used and the amorphous carbon of Example 2 having the specific surface area of 39 m²/g (has-100 made by DENKI KAGAKU KOGYO K. K.) was used as the conductive agent. Except for the above, the same procedure of Example 1 was used to fabricate a positive electrode and a three-electrode cell of Example 4.

### (Comparative Example 6)

In Comparative Example 6, the positive electrode active material of Example 3 represented by the formula Li_{1.06}Ni_{0.56}Mn_{0.38}O₂ was used and the conductive agent was not added as the same as Comparative Example 1. Except for the above, the same procedure of Example 1 was used to fabricate a positive electrode and a three-electrode cell of Comparative Example 6.

### (Comparative Example 7)

In Comparative Example 7, the positive electrode active material of Example 3 represented by the formula Li_{1.06}Ni₀.₅₆Mn_{0.38}O₂ was used and the scale-shaped graphite of Comparative Example 2 having the specific surface area of 8.3 m²/g (UP-10 made by Nippon Graphite Industries, Co., Ltd.) was used as the conductive agent. Except for the above, the same procedure of Example 1 was used to fabricate a positive electrode and a three-electrode cell of Comparative Example 7.

### (Comparative Example 8)

In Comparative Example 8, the positive electrode active material of Example 3 represented by the formula Li_{1.06}Ni_{0.56}Mn_{0.38}O₂ was used and the surface of the positive electrode active material was not covered with the amorphous carbon as the same as Comparative Example 5. Further, as the conductive agent, the vapor-grown carbon fiber (VGCF made by Showa Denko K.K.) was used as the same as Comparative Example 4. Then, the positive electrode active material, the conductive agent and the binding agent were mixed in a volume ratio of 92:5:3 to prepare positive electrode composite slurry. Except for the above, the same procedure was used to fabricate a positive electrode and a three-electrode cell of Comparative Example 8.

Next, as to each three-electrode cell of Examples 3 and 4 and Comparative Examples 6 to 8, each output (mW/cm²) of 50 % of state of charge (SOC) under low temperature environment of -30°C was calculated. Then, as to each three-electrode cell of Examples 3 and 4 and Comparative Examples 6 and 7, an increment ratio of output against output of three-electrode cell of Comparative Example 8 under low temperature environment of -30°C was calculated. The results were shown in Table 2.

**[TABLE 2]**

| Positive electrode active material: Li_{1.06}Ni_{0.56}Mn_{0.38}O₂ | | | | | |
|---|---|---|---|---|---|
| | Covering material of positive electrode active material | | Conductive agent | | Increment ratio of output under -30°C (%) |
| | Type | Specific surface area (m²/g) | Type | Specific surface area (m²/g) | |
| Example 3 | Amorphous carbon | 800 | Amorphous carbon | 800 | 58.3 |
| Example 4 | Amorphous carbon | 800 | Amorphous carbon | 39 | 27.7 |
| Comp.Ex.6 | Amorphous carbon | 800 | - | - | 14.5 |
| Comp.Ex.7 | Amorphous carbon | 800 | Scale-shaped graphite | 8.3 | 5.8 |
| Comp.Ex.8 | - | - | Vapor-grown carbon fiber | - | Base |

As a result, in each of the three-electrode cells of Examples 3 and 4 using the positive electrode wherein the surface of positive electrode active material represented by the formula Li₁₊ₓNiₐMn_{b}Co_{c}O_{2+d} was covered with the amorphous carbon and the conductive agent of amorphous carbon was added, the output characteristics under the low temperature environment of -30°C were remarkably improved as compared with each of the three-electrode cells of Comparative Examples 6 to 8.

Further, in comparison between the three-electrode cells of Examples 3 and 4, in the three-electrode cell of Example 3 wherein the amorphous carbon having the specific surface area of 100 m²/g or more was used, the output characteristics under the low temperature environment of -30°C were much more improved as compared with the three-electrode cell of Example 4.

In the three-electrode cells of Examples 3 and 4 using the positive electrode active material of lithium-containing transition metal composite oxide composed of Ni and Mn not containing Co, the output characteristics under low temperature environment of -30°C was much more improved as compared with the three-electrode cells of Comparative Examples 6 and 8 and the three-electrode cells of Examples 1 and 2 using the positive electrode active material of lithium-containing transition metal composite oxide containing Co.

Further, as compared with the positive electrode active material of lithium-containing transition metal composite oxide containing Co used in Examples 1 and 2, in a case where the positive electrode active material of lithium-containing transition metal composite oxide composed of Ni and Mn not containing Co was used as in Examples 3 and 4, production costs for positive electrode active material are reduced, so that a non-aqueous electrolyte secondary battery having high output characteristics even under low temperature environment may be obtained at low cost.

Although the positive electrode active material of lithium-containing transition metal composite oxide composed of Ni and Mn not containing Co represented by the formula Li_{1.06}Ni_{0.56}Mn_{0.38}O₂ was used in Examples 3 and 4, any positive electrode active material may be used if being represented by the above general formula, for example, in a case where the positive electrode active material represented by Li_{1.06}Ni_{0.52}Mn_{0.42}O₂ is used, the same effect may be obtained.

### DESCRIPTION OF REFERENCE NUMERALS

10 three-electrode cell
11 working electrode (positive electrode)
12 counter electrode (negative electrode)
13 reference electrode
14 non-aqueous electrolyte

## Claims

1. Anon-aqueous electrolyte secondary battery, comprising:
a positive electrode containing a positive electrode active material;
a negative electrode containing a negative electrode active material; and
a non-aqueous electrolyte having lithium ion conductivity;
wherein lithium-containing transition metal composite oxide having a layer structure and being presented by a general formula Li₁₊ₓNiₐMn_{b}Co_{c}O_{2+d} wherein x, a, b, c and d satisfy x+a+b+c=1, 0.25≤ a ≤0.60, 0.25≤ b ≤0.60, 0≤ c ≤0.40, 0≤ x ≤0.10, 0.7≤ a/b ≤ 2.0 and -0.1≤ d ≤0.1 is used as the positive electrode active material of the positive electrode, and
wherein a surface of the positive electrode active material is covered with an amorphous carbon material and a conductive agent of amorphous carbon material is inserted between particles of the positive electrode active material.

2. The non-aqueous electrolyte secondary battery as claimed in Claim 1,
wherein an amorphous carbon material having a specific surface area of 100 m²/g or more is used as the conductive agent of the positive electrode.

3. The non-aqueous electrolyte secondary battery as claimed in Claim 1,
wherein the positive electrode uses a positive electrode composite comprising the positive electrode active material covered with the amorphous carbon material, the conductive agent of the amorphous carbon material, and a binding agent, and a total amount of the amorphous carbon material in the positive electrode composite is within 2 to 10 mass %.

4. The non-aqueous electrolyte secondary battery as claimed in Claim 2,
wherein the positive electrode uses a positive electrode composite comprising the positive electrode active material covered with the amorphous carbon material, the conductive agent of the amorphous carbon material, and a binding agent, and a total amount of the amorphous carbon material in the positive electrode composite is within 2 to 10 mass %.

5. The non-aqueous electrolyte secondary battery as claimed in Claim 1,
wherein lithium-containing transition metal composite oxide having a layer structure and being represented by Li₁₊ₓNiₐMn_{b}O_{2+d} is used as the positive electrode active material having the layer structure and being represented by the general formula Li₁₊ₓNiₐMn_{b}Co_{c}O_{2+d} wherein c defining the amount of Co is 0.

6. The non-aqueous electrolyte secondary battery as claimed in Claim 5,
wherein an amorphous carbon material having a specific surface area of 100 m²/g or more is used as the conductive agent of the positive electrode.

7. The non-aqueous electrolyte secondary battery as claimed in Claim 5,
wherein a positive electrode composite comprising the positive electrode active material covered with the amorphous carbon material, the conductive agent of the amorphous carbon material and s binding agent is used, and a total amount of the amorphous carbon material in the positive electrode composite is within 2 to 10 mass %.

8. The non-aqueous electrolyte secondary battery as claimed in Claim 6,
wherein a positive electrode composite comprising the positive electrode active material covered with the amorphous carbon material, the conductive agent of the amorphous carbon material and a binding agent is used, and a total amount of the amorphous carbon material in the positive electrode composite is within 2 to 10 mass %.
